# EUROPEAN PATENT SPECIFICATION

(11) **EP 0 423 813 B1**
(45) Date of publication and mention of the grant of the patent: **04.01.1995**
(21) Application number: 90120091.5
(22) Date of filing: 19.10.1990
(51) Int. Cl.: F02B 75/22, F02M 35/10

(54) **V-type two-cycle internal combustion engine**
Zweitakt-Brennkraftmaschine mit in V-form angeordneten Zylindern
Moteur à combustion interne à deux temps, à cylindres rangés en V

(30) Priority: 19.10.1989 JP 272697/89
(43) Date of publication of application: 24.04.1991
(73) Proprietor: YAMAHA HATSUDOKI KABUSHIKI KAISHA, Iwata-shi Shizuoka-ken, 438 (JP)
(72) Inventor: Ogura, Toshihiko, c/o Yamaha Hatsudoki K.K., Iwata-Shi, Shizuoka-Ken 438 (JP)
(74) Representative: Grünecker, Kinkeldey, Stockmair & Schwanhäusser Anwaltssozietät

(56) References cited:
- US-A- 4 244 332
- US-A- 4 519 471
- US-A- 4 686 944
- PATENT ABSTRACTS OF JAPAN vol. 9, no. 183 (M-400)(1906) 30 July 1985,& JP-A-60 50025 (YAMAHA) 19 March 1985

## Description

The present invention relates to a V-type two-cycle internal combustion engine and a motorcycle equipped with such an engine as indicated in the preamble portions of claims 1 and 15, respectively. Specifically, the present invention is directed to an improved disposal of an air intake/fuel supply-device for each of the cylinder units to feed an appropriate fuel/air-mixture to several combustion chambers provided in each of the cylinder units in order render the engine more compact and to improve the response characteristics and accuracy of the control of the fuel feed rate supplied for combustion to the internal combustion engine.

Conventionally a V-type two-cycle internal combustion engine implying a reed valve type controlled introduction of a fuel/air-mixture through air intake ports of a crankcase is provided with an air intake device associated to the air intake port, respectively, communicating to a crank chamber formed inside the crankcase, and a carburettor connected to the air intake port through a cab-joint, whereby a fuel/air-mixture formed in the carburettor is introduced into the crankcase. Usually an air intake device of the afore-mentioned kind is designed to dispose the carburettor in a position apart from the cylinder head locating the carburettor with the cab-joint upwardly or downwardly spaced apart from the cylinder head. Alternatively, it is found to cause the carburettor to protrude outwardly from the V-type cylinder bank in order to avoid any interference in between the carburettor and the cylinder heads, respectively. However, the afore-indicated structure rendered the engine unit to become relatively bulky. Moreover, as the distance in between the carburettor and the air intake port is increased the response characteristic of the fuel supply is affected as reduced response capabilities with respect to the fuel feed rate in compliance with a variation of the engine speed has experienced and, moreover, a reduced accuracy of fuel control concerning the feed rate thereof was recognised.

From US-A-4 519 471 it is already known to us the space between the cylinder of a V-engine for disposing a carburetor type intake arrangement. Also in such a case, however, the arrangement remains relatively bulky and an improvement of the accuracy of fuel suppy still is derivable.

Accordingly, it is an objective of the present invention to provide an improved V-type two-cycle internal combustion engine which enables to render the engine unit more compact and to improve the accuracy and response characteristics in controlling the fuel feed rate to the engine.

In order to perform the afore-indicated objectives the present invention provides V-type two-cycle internal combustion engine specifically for motorcycles wherein the air intake port of each of the cylinder units is disposed inside the V-bank arrangement of the cylinder units and is communicated to an air intake passageway which, in turn, receives a throttle valve of said air intake passageway and that a fuel injection device is disposed substantially inside a space left in between the inclined cylinder units of the V-bank arrangement to inject pressurized fuel into said air intake passageway and/or said air intake ports, respectively, said air intake air passageway comprises a joint tube projecting from the crankcase and encircling the associated air intake port, said joint tube in turn supporting an injector tube body of the related fuel injection device wherein said injector tube body is adapted to accommodate the throttle valve and to support a fuel injection valve at an enlarged wall portion thereof.

Accordingly, as the air intake device, each one being associated to an air intake port of the crankcase according to the plurality of cylinder units, comprises a fuel injection device which is disposed "inside" the V-bank i.e. within the space left in between the cylinder units of the V-bank arrangement which define an angle in between their longitudinal cylinder axes and a fuel injection device is used instead of a carburettor, it is possible to render the engine unit to become compacted and small sized as compared with conventional engine units, in which a carburettor projects outwardly from the V-bank arrangement of the cylinder units.

Accordingly, each fuel feed device comprising an injector tube body accommodating the throttle valve and a fuel injection valve supported through a wall portion of the injector body is disposed inside the V-bank and, thus, the fuel injection valve is located very close to the air intake port, respectively. As a result thereof the fuel injection is directed to the air intake port or the crank chamber directly and, consequently, substantially no fuel droplets remain in the air intake passageway improving the response characteristic, i.e. the fuel feed rate in response to a variation of the engine operational parameters, such as engine speed. Moreover, in this way each fuel injection valve is disposed very close to the associated air intake port permitting the fuel to be accurately and reliably fed into each cylinder at every revolution of the crankshaft, thus, improving the accuracy in controlling the fuel feed rate to the engine.

In the present invention the expression that "the fuel injection device is disposed inside the V-bank arrangement" or "is disposed within a space left in between the inclined cylinder units of the V-bank arrangement" is intended to characterize that the greater part of the main body of the fuel injection device except its associated fuel feed hoses, via harnesses of the like parts is disposed within a sector which, in crosssection, is encircled by a circle line connecting the top portions of the cylinder heads and the cylinder axes of the cylinder units of the V-bank arrangement. I.e., "inside the V-bank arrangement" means "inside a sector whose radius is the distance from the axis of the crankshaft to the intersecting point between the axis of each cylinder unit and the upper surface of the cylinder heads and whose centre is on the crankshaft".

Other preferred embodiments of the present invention are laid down in the other sub-claims.

Further objectives, features and advantages of the present invention will become more apparent from the following description of an embodiment of the present invention in conjunction with the associated drawings, wherein:
Figure 1 is a left-side view of a motorcycle according to the present invention carrying the internal combustion engine designed according to the concept of the present invention,
Figure 2 is a right-side view, partially in cross-section, of a V-type two-cycle engine of a motorcycle according to a first embodiment of the present invention,
Figure 3 is a front view of the built-in engine according to Figures 1 and 2,
Figure 4 is right-side view, partially in cross-section, of a V-type two-cycle internal combustion engine of a motorcycle according to a second embodiment of the present invention, and
Figure 5 is front view of the engine of Figure 4.

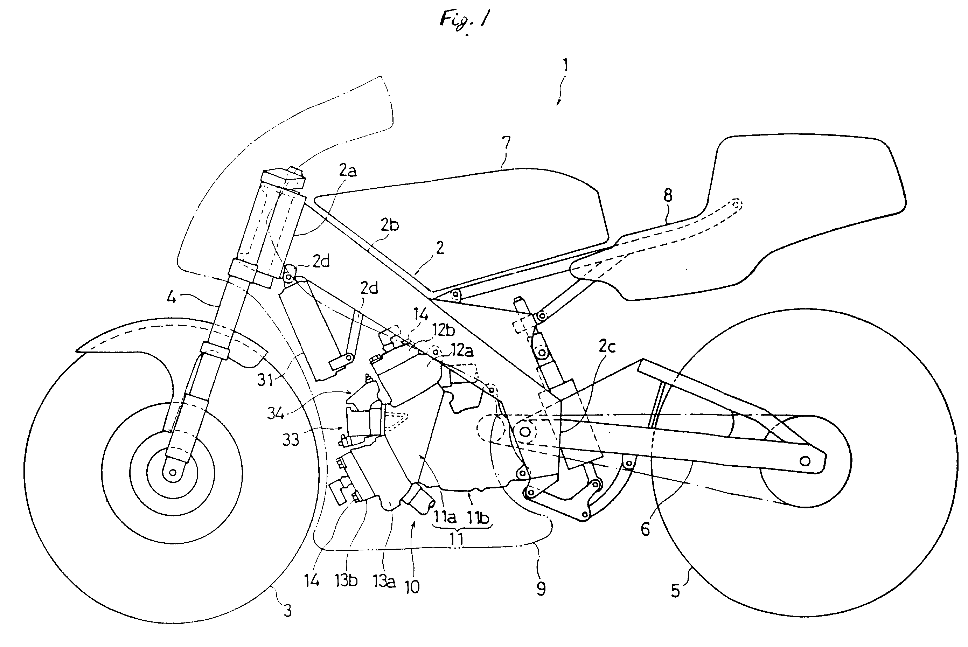

In the following the present invention will next be explained with reference to Figures 1 through 3 showing a first embodiment of the present invention. The reference numeral 1 denotes a motorcycle equipped with an internal combustion engine designed according to the present invention. Said motorcycle 1 has a frame 2 composed of a head pipe 2a a pair of left and right main frames 2b, each having a rectangular cross-section and each being connected by welding to the head pipe 2a at its front end, respectively, a pair of rear arm brackets 2c connected by welding to the rear ends of the main frames 2b, and a cross pipe (not shown) which connects the brackets 2c to each other. Beneath the lower side to the left and right main frames is disposed a radiator 31 supported by a bracket 2d which is fixed to the main frame 2b. The head pipe 2a has a lower end to which a front fork 4 is rotably supported. Reference numeral 3 denotes a front wheel the shaft of which is rotably supported by the front fork 4. The rear arm brackes 2c pivotally support rear arms 6, the rear ends of which rotably support a rear wheel shaft.

Reference numeral 7 denotes a tank cover of a fuel tank disposed ahead of a seat 8.

The lower end portions of the right and left mainframes 2b and the fore-portion of the head pipe 2a are surrounded by a cowling 9 which is adapted to suspendedly support a water cooled two-cycle V-type engine 10 having two cylinders 12, 12b. Reference numeral 11 denotes a crankcase 11 composed of two parts, a front case 11a and a rear case 11b. Associated to a connection opening 11c formed in an upward portion of the front case 11a the upper cylinder 12a is disposed inclined upwardly, with the upper cylinder head 12b disposed thereon. The cylinder 12a and the associated cylinder head 12b form an upper cylinder unit which is secured by means of head bolts 14.

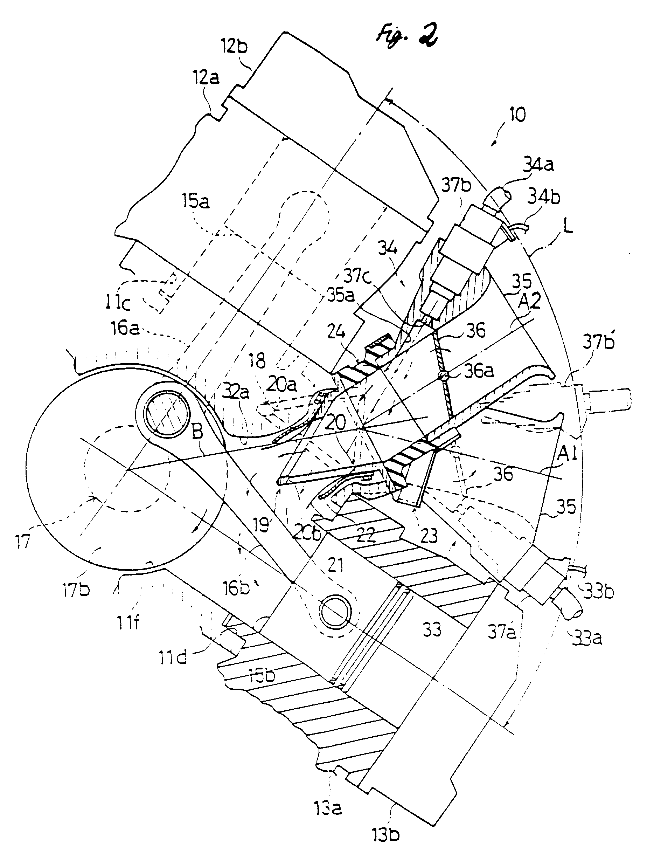

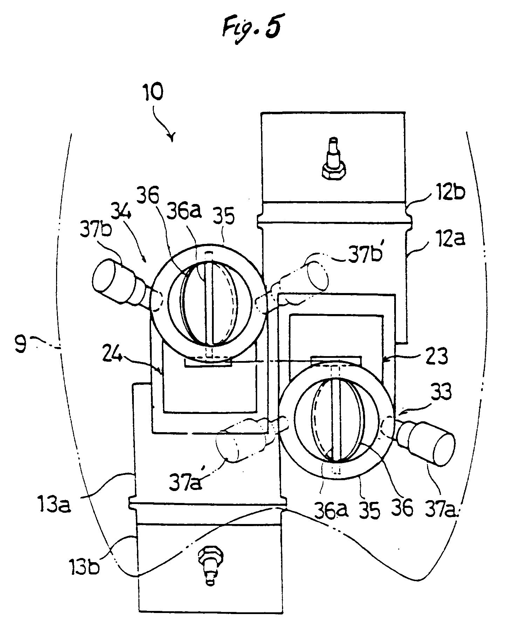

In conjunction with a connection opening 11d formed in a lower portion of the front case 11a the other, lower cylinder 13a is disposed inclined downwardly on which a lower cylinder head 13b is placed. The lower cylinder 13a and lower cylinder head 13b form a lower cylinder unit secured by means of head bolts 14 to the crankcase 11. In a side view to the vehicle the bank angle of the cylinder bank defined by the upper and lower cylinders 12a and 13a amounts to 90°. In a front view of the motorcycle the upper and lower cylinders 12a, 13a are laterally offset with respect to a notional vertical centre plane, that means the upper cylinder 12a is located right side and the lower cylinder 13a is disposed left side with respect to the longitudinal axis of the motorcycle (see Figures 2 and 5).

Pistons 15a, 15b are slidably inserted in each of the cylinders 12a, 13a, respectively, said pistons 15a, 15b being connected through connecting rods 16a, 16b to a crankshaft 17 disposed laterally between the front and rear cases 11a, 11b of the crankcase 11.

Air intake ports 32a and 32a for the upper and lower cylinders are formed inside of the bank in the front case 11a. The intake ports 32a and 32a are in fluid communication with respective crank chamber 11f and 11f. Inserted into the upper and lower intake ports 32a and 32a are reed valves 18 and 19 for the upper and lower cylinders 12a, 13a which valves 18, 19 are fixedly secured by bolts to the peripheral portions of the air intake ports 32a and 32a together with joint tubes 23 and 24 for the upper and lower cylinders 12a, 13a. Accordingly, the upper air intake port 32a is associated to the lower cylinder unit 13a, 13b whereas the lower air intake port 32a is associated to the upper cylinder unit 12a, 12b, respectively.

The reed valves 18 and 19 each have a valve plate 21 and a guide plate 22 which are bolted together for opening and closing an opening 20a or 20b of a frame 20 which has a triangular cross-section in which the apex of the reed valve 18 is displaced upwardly and the apex of the reed valve 19 downwardly. Thus, the upper and lower reed valve 18 and 19 are of a so-called parallel disposition type with their openings 20a and 20b being located on a plane parallel with the crankshaft 17 and have respective apexes which are oriented, in the state mounted on the intake ports 32a and 32a, toward the upper and lower cylinders 12a and 13a.

The upper and lower joint tubes (air intake pipes) 23 and 24 which project from the crankcase 11 surrounding the respective air intake ports 32a at their outside and support fuel injection devices 33, 34 for the uppoer and lower cylinder units 12a, 12b, 13a, 13b, respectively.

Each fuel injection device 33, 34 comprises an injector tube body 35 accommodating a throttle valve 36 of the butterfly type and fuel injection valve 37a, 37b supported along a side wall of the injector tube body 35 respectively, which, in turn, is supported by the associated joint tube 23, 24. Thus, the joint tube 33, 34 and the associated injector tube body 35 of the related fuel injection device 33, 34 defines an air intake passageway through which intake air is sucked into a crank chamber of the crankcase mixed up with a charge of fuel injected to form a fuel/air-mixture.

An axis A1 of the joint tube 23 and the fuel injection device 33 (injector tube body 35), said joint tube 23, 24 and said injector tube body 35 of each of the fuel injection devices 33, 34 forming an intake air passageway, is downwardly inclined with respect to the bisector B of the bank angle (see Figure 2), whereas the axis A2 of the joint tube 24 and the fuel injection device 34 (injector tube body 35) is upwardly inclined, so that in a direction parallel to the crankshaft 17 these two axes A1, A2 extend symmetrically with respect to the bisector B.

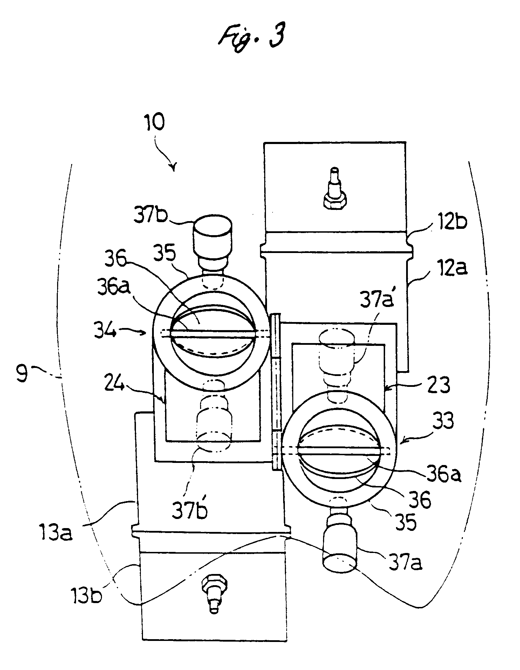

As shown in Figures 2 and 3, each fuel injection device 33, 34 has an injector tube body 35 within which the throttle valve 36 of a butterfly type flap is disposed. As already mentioned, a fuel injection valve 37a, 37b is disposed at the lower or upper side wall of the injector tube body 35 of each of the fuel injection devices 33, 34. In a first embodiment of the present invention as shown in Figures 2 and 3, each of the throttle valves 36 has a horizontally oriented valve shaft 36a and is supported to be rotatable in a direction as indicated by an arrow in Figure 1. The fuel injection valve 37a and 37b starts opening from an upper and lower peripheral portion of the air intake passageway, respectively. Additional to and at the downstream side of the throttle valve 36 an injection guide hole 35a is formed opening into the air intake passageway to which an injection nozzle 37c of each of the fuel injection valves 37a, 37b opens. The fuel is injected from the fuel injection valves 37a, 37b in the direction of the openings 20a, 20b of the frames 20 of the reed valves 18, 19. The reference numerals 33a, 34a denote fuel feed hoses and the numeral 33b and 34b denote power supply via harnesses.

According to the present invention the air intake device comprising the fuel injection devices 33, 34 and further components is located within a region of the V-bank arrangement defined by the upper and lower cylinder units 12a, 12b; 13a, 13b, seen in the direction of the crankshaft 17. In Figure 2 said region is defined the curve L and the two longitudinal centre planes of the cylinder units, i.e. the radius of said region is the distance from the crankshaft 17 to the intersecting point between the upper surface of the cylinder heads 12b, 13b and the longitudinal axes of these cylinder units. the greater part of the air intake and fuel supply devices is included in that region except those connecting parts, such as the fuel hoses 33a, 34a and wire harnesses 33b and 34b which are lead outwards.

In the following the operation and effects obtained by this embodiment of the present invention will be explained.

When the pressure within the crank chamber becomes negative as a result of the upward movement of the piston 15a, 15b the reed valves 18, 19 open so that, when the outside air is passed through the air intake passageway formed by the joint tube 23, 24 and the injector tube bodies 35 of the fuel injection devices 33, 34, respectively, the fuel is injected from the fuel injection valves 37a, 37b of the fuel injection devices 33, 34 to form a fuel/air-mixture. The fuel/air-mixture is sucked through the reed valves 18, 19 into the crank chamber 11f and is then introduced into the combustion chambers defined by the cylinders 12a, 13a and the pistons 15a, 15b through scavenging passages. In this case the fuel from the injection valve 37a of the upper cylinder 12a, is meanly passed through the opening 20a of the reed valve 18 and is injected into the crank chamber 11f in a direction opposition to the rotational direction of the crankweb 17b. On the other hand, the fuel from the injection valve 37b for the lower cylinder 13b is mainly passed through the opening 20b of the reed valve 19 and is injected in the direction of rotation of the crankweb 17b.

In the thus designed internal combustion engine of this embodiment the engine unit is rendered compact as compared with the case in case, for example, a carburettor is dispoed so as not to interfere with the cylinder head, and said result is obtained by means of disposing the fuel injection devices 33, 34 within the region L of the V-bank arrangement of the cylinder units 12a, 12b; 13a, 13b and is not protruded therefrom.As In this embodiment the fuel injection valves 37a, 37b are dispoed along the lower and upper side walls of the injector tube bodies 35 the fuel injection devices 33, 34, which are generally small in size can be designed to be further increased in compactness as compared with the conventional air intake devices including fuel supply system using a carburettor. Thus, the air intake device including fuel injection device 33, 34 can be disposed within the V-bank arrangement of the cylinder units respectively and the internal combustion engine can be rendered more compact as a whole.

Moreover, as each injection nozzle 37c of each of the injection valves 37a, 37b is disposed adjacent to and downsteam of the opening side of the throttle valve 36 fuel injection can be effected at a position where the air flow rate is high so that the mixing of air and fuel may be effectively performed.

Additionally, as the fuel injection valve 37a, 37b are disposed adjacent to the reed valves 18, 19 disposed at the air intake port 32a, fuel injection is performed at a position close to the air intake port 32a and, accordingly, the response of the fuel feed rate to the right engine operational perimeters, such as engine speed, is improved. The close approach of the point of injection to the air intake port 32a permits the injected fuel to be fed directly to the engine without remaining or depositing same in the air intake passageway enabling to increase the accuracy of the control of the fuel injection rate.

As shown in Figures 2 and 3 the injection valve 37a for the upper cylinder 12a is disposed beneath the lower side wall of the injector tube body 35 and the fuel injection valve 37b for the lower cylinder 13a is disposed above the upper side wall of the injector tube body 35. However, as shown in dotted lines in Figures 2 and 3 the fuel injection valves 37a′ and 37b′ may be disposed above the upper side wall and beneath the lower side wall, respectively.

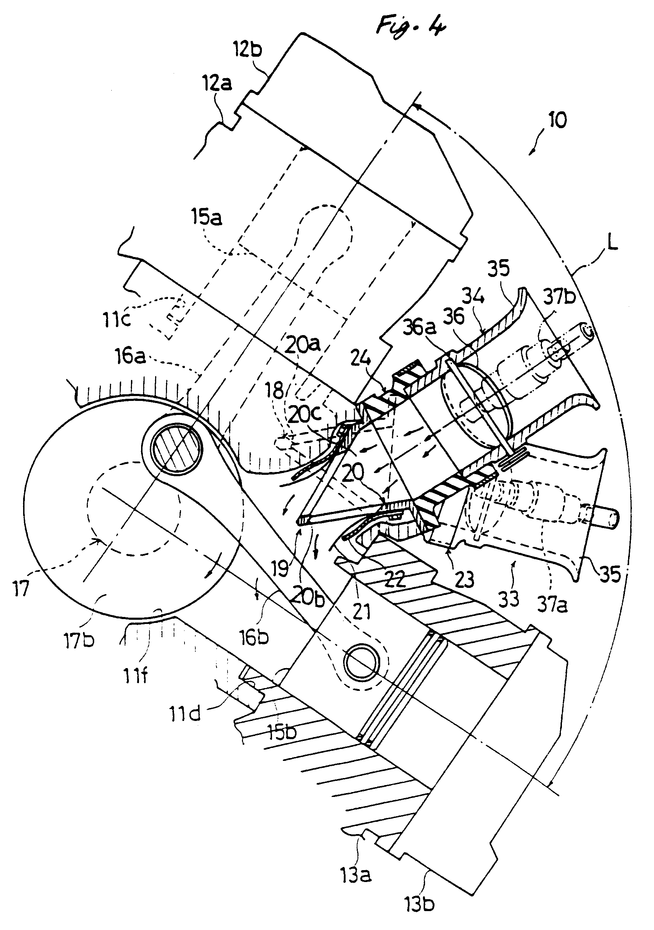

In the above embodiment of the present invention the throttle valve 36, 36a is disposed in a manner that the valve shaft 36a is oriented horizontally. The present invention, of course, is not limited to any specific orientation of the throttle valve. For example, as shown in a second embodiment of the present invention illustrated in Figures 4 and 5, the valve shaft 36a may be oriented vertically. In Figures 4 and 5 the reference numerals similar to those in Figures 2 to 3 designate the same components.

In said second embodiment the fuel injection valve 37a and 37b are disposed inclined along the outside of the side wall of the injector tube body 35, respectively and are positioned close to and downstream of the opening side of the throttle valve 36. In the case the fuel injection is directed towards the inside wall 20c of the frame 20 of the read valve 18, 19, located in the centre of the engine.

Through the second embodiment of the present invention the same promising effects and performances as in the first embodiment are obtained.

Figures 4 and 5 show the fuel injection valve 37a and 37b to be disposed along the outside of a side wall of the injection tube body 35. However, these injection valves 37a, 37b may be disposed along the inside of the side walls of the injector tube bodies as well, as illustrated in two dotted-lines in Figure 5. In this case the fuel injection valve 37a, 37b are disposed in a central portion of the engine so that the engine unit of the motorcycle can be rendered yet even more compact.

The afore-indicated embodiments show the reed valve 18, 19 of a parallel disposition type. However, a layout could be selected wherein the reed valves be of a so called perpendicular disposition type wherein the opening of the reed valves is positioned on a plane perpendicularly to crankshaft, respectively.

## Claims

1. A V-type two-stroke internal combustion engine comprising a cylinder bank having at least first and second cylinder units (12a,12b,13a,13b) in V-bank arrangement, a crankcase (11) supporting said cylinder units and accommodating a crankshaft drivingly connected to pistons (15a,15b) slidably received in cylinders (12a,13a) of said cylinder units, an air intake device for each of the cylinder units including an air intake port (32a) at the crankcase (11), respectively, and a fuel supply unit (33,34) adapted to be communicated to the air intake port (32a), respectively, to introduce air and fuel through said air intake port (32a) to the crankcase (11), the air intake port (32a) being disposed inside the V-bank arrangement of the cylinder units (12a, 12b; 13a, 13b) and being communicated to an air intake passageway (23,24,35) receiving a throttle valve (36) **characterized in that**
the intake port (32a) communicates with the crankcase (11),
a fuel injection device (33,34) is disposed substantially inside the V-bank arrangement of the cylinder units (12a,12b,13a,13b) to inject pressurised fuel into said air intake passageway (23,24,35) and/or said air intake port (32a),
the air intake passageway (23,24,35) comprises a joint tube (23,24) projecting from the crankcase (11) and supporting an injector tube body (35)of the fuel injection device (33,34), which injector tube body (35) accommodates said throttle valve (36) and supports a fuel injection valve (37a,37b) through an enlarged wall portion thereof.

2. Internal combustion engine as claimed in claim 1 **characterized in that**, each air intake port (32a) is controlled by a reed valve (18, 19), respectively.

3. Internal combustion engine as claimed in claim 2, **characterized in that**, each joint tube (23; 24) comprises an attachment flange fastened to the crankcase (11) in a manner to surround the associated air intake port (32a) and, opposite to the attachment flange, forms an angular seat portion adapted to receive an downstream side of the injector tube body (35) therein.

4. Internal combustion engine as claimed in at least one of the preceding claims 1 to 3, **characterized by** a two cylinder engine (10) comprising a first upper cylinder unit (12a, 12b) disposed at a front portion (11a) of the crankcase (11) inclined upwardly, and a second lower cylinder unit (13a, 13b) disposed at the front portion (11a) of the crankcase (11) inclined downwardly, and a fuel injection assembly (33, 34) supported through a front portion (11a) of the crankcase (11) in between both cylinder units (12a, 12b; 13a, 13b).

5. Internal combustion engine as claimed in claim 4, **characterized in that**, both cylinder units (12a, 12b; 13a, 13b) are disposed laterally offset with respect to a notional longitudinal plane extending perpendicularly to the crankshaft (17).

6. Internal combustion engine as claimed in claims 4 or 5, **characterized in that**, both cylinder units (12a, 12b; 13a, 13b) define a 90° V-angle of the V-bank arrangement.

7. Internal combustion engine as claimed in at least one of the preceding claims 1 to 6, **characterized in that**, a lower air intake port (32a) is associated to the upper cylinder unit (12a, 12b) and an upper air intake port (32a) is associated to the lower cylinder unit (13a, 13b), and that the upper and lower reed valves (18, 19) fixedly secured to peripheral portions of the air intake ports (32a) are of parallel disposition type with their openings (20a, 20b) being located on a plane parallel to the crankshaft (17).

8. Internal combustion engine as claimed in at least one of the preceding claims 1 to 6, **characterized in that**, a lower air intake port (32a) is associated to the upper cylinder unit (12a, 12b) and an upper intake port (32a) is associated to the lower cylinder unit (13a, 13b), and that the upper and lower reed valves (18, 19) fixedly secured to peripheral portions of the air intake ports (32a) are of a perpendicular disposition type with their openings (20a, 20b) being located on the plane perpendicularly to the crankshaft (17).

9. Internal combustion engine as claimed in at least one of the preceding claims 1 to 8, **characterized in that**, the axes (A1, A2) of both the downwardly inclined air intake passageway (23, 35) comprising the downwardly inclined fuel injection device (33) and the upwardly inclined air intake passageway (24, 35) comprising the upwardly inclined fuel injection device (34) extend symmetrically with respect to a bisector (B) of the V-type cylinder bank.

10. Internal combustion engine as claimed in at least one of the preceding claims 2 to 9, **characterized in that**, each injector tube body (35) comprises an injection guide hole (35a) to which an injection nozzle (37c) of the injection valve (37a, 37b) opens, respectively.

11. Internal combustion engine as claimed in claim 10, **characterized in that**, said injection guide hole (35a) opens into the air intake passageway (23, 35; 24, 35) downstream of the throttle valve (36, 36a) facing to the air intake port (32a), respectively.

12. Internal combustion engine as claimed in at least one of the preceding claims 1 to 11, **characterized in that**, the fuel injection valves (37a; 37b) are disposed along an upper or lower side wall of the upper fuel injection device (33) and a lower or upper side wall of the lower fuel injection device (34), respectively.

13. Internal combustion engine as claimed in at least one of the preceding claims 1 to 12, **characterized in that**, the fuel injection valves (37a, 37b) are disposed laterally along outer or inner side walls of each of the fuel injection devices (33, 34), respectively.

## Patentansprüche

1. Zweitakt-Brennkraftmaschine vom V-Typ mit einer Zylinderbank, die zumindest eine erste und eine zweite Zylindereinheit (12a,12b,13a,13b) in einer V-Bank-Anordnung aufweist, einem Kurbelgehäuse (11), das die Zylindereinheiten lagert und eine Kurbelwelle aufnimmt, die antreibend mit Kolben (15a, 15b) verbunden ist, die gleitbar in Zylindern (12a, 13a) der Zylindereinheiten aufgenommen sind, einer Lufteinlaßvorrichtung für jede der Zylindereinheiten mit einer Lufteinlaßöffnung jeweils an dem Kurbelgehäuse (11), und einer Kraftstoffzuführungseinheit (33, 34), die vorgesehen ist, jeweils mit der Lufteinlaßöffnung (32a) zu kommunizieren, um Luft und Kraftstoff durch die Lufteinlaßöffnung (32a) zu dem Kurbelgehäuse (11) zu führen, wobei die Lufteinlaßöffnung (32a) innerhalb der V-Bank-Anordnung der Zylindereinheiten (12a,12b;13a,13b) angeordnet ist und mit einem Lufteinlaßkanal (23,24,35) kommuniziert, der ein Drosselventil (36) aufnimmt, **dadurch gekennzeichnet,** daß die Einlaßöffnung (32a) mit dem Kurbelgehäuse (11) kommunizierend verbunden ist,
eine Kraftstoffeinspritzvorrichtung (33, 34), im wesentlichen innerhalb der V-Bank-Anordnung der Zylindereinheiten (12a,12b,13a,13b) angeordnet ist, um unter Druck stehenden Kraftstoff in den Lufteinlaßkanal (23,24,35) und/oder die Lufteinlaßöffnung (32a) einzuspritzen, wobei der Lufteinlaßkanal (23,24,35) ein Verbindungsrohr (23, 24) aufweist, das von dem Kurbelgehäuse (11) vorspringt und einen Einspritz-Rohrkörper (35) der Kraftstoffeinspritzvorrichtung (33, 34) lagert, wobei der Einspritz-Rohrkörper (35) das Drosselventil (36) aufnimmt und ein Kraftstoffeinspritzventil (37a, 37b) durch einen vergrößerten Wandabschnitt lagert.

2. Brennkraftmaschine nach Anspruch 1, **dadurch gekennzeichnet,** daß jede Lufteinlaßöffnung (32a) durch ein Reed-Ventil (18, 19) jeweils gesteuert ist.

3. Brennkraftmaschine nach Anspruch 2, **dadurch gekennzeichnet,** daß jedes Verbindungsrohr (23; 24) einen Befestigungsflansch aufweist, der an dem Kurbelgehäuse (11) befestigt ist, derart, daß er die zugehörige Lufteinlaßöffnung (32a) umgibt und, gegenüberliegend zu dem Befestigungsflansch, einen abgewinkelten Sitzabschnitt aufweist, der vorgesehen ist, um eine stromabseitige Seite des Einspritz-Rohrkörpers (35) darin aufzunehmen.

4. Brennkraftmaschine nach zumindest einem der vorhergehenden Ansprüche 1 bis 3, **gekennzeichnet durch** einen Zweitaktmotor (10) mit einer ersten, oberen Zylindereinheit (12a, 12b), angeordnet an einem Vorderabschnitt (11a) des Kurbelgehäuses (11) und nach oben abgewinkelt, und mit einer zweiten, unteren Zylindereinheit (13a, 13b), angeordnet an dem Vorderabschnitt (11a) des Kurbelgehäuses (11) und nach unten abgewinkelt, und mit einer Kraftstoffeinspritzanordnung (33, 34), die durch einen Vorderabschnitt (11a) des Kurbelgehäuses (11) zwischen beiden Zylindereinheiten (12a, 12b; 13a, 13b) gelagert ist.

5. Brennkraftmaschine nach Anspruch 4, **dadurch gekennzeichnet,** daß beide Zylindereinheiten (12a, 12b; 13a, 13b) seitlich versetzt in bezug auf eine gedachte Längsebene angeordnet sind, die sich rechtwinklig zu der Kurbelwelle (17) erstreckt.

6. Brennkraftmaschine nach Anspruch 4 oder 5, **dadurch gekennzeichnet,** daß beide Zylindereinheiten (12a, 12b; 13a, 13b) einen 90° V-Winkel der V-Bank-Anordnung bilden.

7. Brennkraftmaschine nach zumindest einem der vorhergehenden Ansprüche 1 bis 6, **dadurch gekennzeichnet,** daß eine untere Lufteinlaßöffnung (32a) mit der oberen Zylindereinheit (12a, 12b) verbunden ist und eine obere Lufteinlaßöffnung (32a) mit der unteren Zylindereinheit (13a, 13b) verbunden ist und daß das obere und untere Reed-Ventil (18, 19), die fest an den Umfangsabschnitten der Lufteinlaßöffnung (32a) befestigt sind, vom Typ der Parallelanordnung sind, wobei ihre Öffnungen (20a, 20b) in einer Ebene angeordnet sind, die sich parallel zur Kurbelwelle (17) erstreckt.

8. Brennkraftmaschine nach zumindest einem der vorhergehenden Ansprüche 1 bis 6, **dadurch gekennzeichnet,** daß eine untere Lufteinlaßöffnung (32a) mit der oberen Zylindereinheit (12a, 12b) und eine obere Einlaßöffnung (32a) mit der unteren Zylindereinheit (13a, 13b) verbunden ist und daß das obere und untere Reed-Ventil (18, 19), die fest mit den Umfangsabschnitten der Lufteinlaßöffnungen (32a) verbunden sind, vom Typ rechtwinkliger Anordnung sind, wobei ihre Öffnungen (20a, 20b) in der Ebene angeordnet sind, die sich rechtwinklig zu der Kurbelwelle (17) erstreckt.

9. Brennkraftmaschine nach zumindest einem der vorhergehenden Ansprüche 1 bis 8, **dadurch gekennzeichnet,** daß die Achsen (A1, A2) sowohl des nach unten geneigten Lufteinlaßkanales (23, 35) mit der nach unten geneigten Kraftstoffeinspritzvorrichtung (33) als auch der nach oben geneigte Lufteinlaßkanal (24, 35) mit der nach oben geneigten Kraftstoffeinspritzvorrichtung (34) sich symmetrisch in bezug auf eine Winkelhalbierende (B) der V-Typ-Zylinderbank erstrecken.

10. Brennkraftmaschine nach zumindest einem der vorhergehenden Ansprüche 2 bis 9, **dadurch gekennzeichnet,** daß jeder Einspritz-Rohrkörper (35) eine Einspritz-Führungsbohrung (35a) aufweist, zu der sich jeweils eine Einspritzdüse (37c) des Einspritzventiles (37a, 37b) öffnet.

11. Brennkraftmaschine nach Anspruch 10, **dadurch gekennzeichnet,** daß die Einspritz-Führungsbohrung (35a) sich jeweils in den Lufteinlaßkanal (23, 35; 24, 35) stromab des Drosselventiles (36, 36a), der Lufteinlaßöffnung (32a) zugewandt, öffnet.

12. Brennkraftmaschine nach zumindest einem der vorhergehenden Ansprüche 1 bis 11, **dadurch gekennzeichnet,** daß die Kraftstoffeinspritzventile (37a; 37b) jeweils entlang einer oberen oder unteren Seitenwand der oberen Kraftstoffeinspritzvorrichtung (33) und einer unteren oder oberen Seitenwand der unteren Kraftstoffeinspritzvorrichtung (34) angeordnet sind.

13. Brennkraftmaschine nach zumindest einem der vorhergehenden Ansprüche 1 bis 12, **dadurch gekennzeichnet,** daß die Kraftstoffeinspritzventile (37a, 37b) jeweils seitlich entlang einer äußeren oder inneren Seitenwand jeder der Kraftstoffeinspritzvorrichtungen (33, 34) angeordnet sind.

## Revendications

1. Moteur à combustion interne à deux temps, à cylindres disposés en V, comprenant une rangée de cylindre présentant au moins un premier et un deuxième ensembles de cylindres (12a, 12b, 13a, 13b) disposés selon un agencement a rangées disposées en V, un carter de vilebrequin (11) supportant lesdits ensembles de cylindres et logeant un vilebrequin relié, de façon à assurer un entraînement, à des pistons (15a, 15b) logés à coulissement dans les cylindres (12a, 13a) desdits ensembles de cylindres, un dispositif d'admission d'air destiné à chacun des ensembles de cylindre comprenant respectivement un orifice d'admission d'air (32a) au niveau du carter de vilebrequin (11), et un ensemble d'alimentation en carburant (33, 34) adaptés, à être respectivement mis en communication avec l'orifice d'admission d'air (32a), afin d'introduire de l'air et du carburant dans ledit orifice d'admission d'air (32a) vers le carter de vilebrequin (11), l'orifice d'admission d'air (32a) étant disposé dans l'agencement à rangées disposées en V des ensembles de cylindres (12a, 12b; 13a, 13b) et mis en communication avec un passage d'admission d'air (23, 24, 35) logeant une soupape d'étranglement (36), caractérisé en ce que
l'orifice d'admission (32a) communique avec le carter de vilebrequin (11),
un dispositif d'injection de carburant (33, 34) est disposé essentiellement dans l'agencement à rangées disposées en V des ensembles de cylindres (12a, 12b, 13a, 13b) afin d'injecter du carburant pressurisé dans ledit passage d'admission d'air (23, 24, 35) et/ou ledit orifice d'admission d'air (32a),
le passage d'admission d'air (23, 24, 35) comprend un tube de liaison (23, 24) faisant saillie du carter de vilebrequin (11) et supportant un corps de tube d'injecteur (35) du dispositif d'injection de carburant (33, 34), ce corps de tube d'injecteur (35) logeant ladite soupape d'étranglement (36) et supportant une soupape d'injection de carburant (37a, 37b) dans une partie de paroi agrandie.

2. Moteur à combustion interne selon la revendication 1, caractérisé en ce que chaque orifice d'admission d'air (32a) est respectivement commandé par une valve à membrane (18, 19).

3. Moteur à combustion interne selon la revendication 2, caractérisé en ce que chaque tube de liaison (23; 24) comprend un rebord de fixation fixé au carter de vilebrequin (11), de manière à entourer l'orifice d'admission d'air (32a) associé et, à l'opposé du rebord de fixation, forme une partie en siège annulaire adaptée de façon à loger en son sein un côté aval du corps de tube d'injecteur (35).

4. Moteur à combustion interne selon au moins l'une des revendications 1 à 3 précédentes, caractérisé par un moteur à deux cylindres (10) comprenant un premier ensemble de cylindres (12a, 12b) supérieur, disposé sur une partie avant (11a) du carter de vilebrequin (11) inclinée vers le haut, et un second ensemble de cylindres (13a, 13b) inférieur, disposé sur la partie avant (11a) du carter de vilebrequin (11) inclinée vers le bas, et un ensemble d'injection de carburant (33, 34) supporté par une partie avant (11a) du carter de vilebrequin (11), entre les deux ensembles de cylindres (12a, 12b; 13a, 13b).

5. Moteur à combustion interne selon la revendication 4, caractérisé en ce que les deux ensembles de cylindres (12a, 12b; 13a, 13b) sont disposés de façon décalée latéralement par rapport à un plan longitudinal fictif s'étendant perpendiculairement au vilebrequin (17).

6. Moteur à combustion interne selon les revendications 4 ou 5, caractérisé en ce que les deux ensembles de cylindres (12a, 12b; 13a, 13b) définissent un angle en V de 90° pour l'agencement à rangées disposées en V.

7. Moteur a combustion interne selon au moins l'une des revendications 1 à 6 précédentes, caractérisé en ce qu'un orifice d'admission d'air (32a) inférieur est associé à l'ensemble de cylindres (12a, 12b) supérieur et un orifice d'admission d'air (32a) supérieur est associé à l'ensemble de cylindres (13a, 13b) inférieur, et en ce que les valves à membrane supérieure et inférieure (18, 19) fixées rigidement à des parties périphériques des orifices d'admission d'air (32a) sont de type à disposition parallèle, leurs ouvertures (20a, 20b) se situant sur un plan parallèle au vilebrequin (17).

8. Moteur à combustion interne selon au moins l'une des revendications 1 à 6 précédentes, caractérisé en ce qu'un orifice d'admission d'air (32a) inférieur est associé à l'ensemble de cylindres (12a, 12b) supérieur et un orifice d'admission d'air (32a) supérieur est associé à l'ensemble de cylindres (13a, 13b) inférieur, et en ce que les valves à membrane supérieure et inférieure (18, 19) fixées rigidement à des parties périphériques des orifices d'admission d'air (32a) sont de type à disposition perpendiculaire, leurs ouvertures (20a, 20b) se situant sur le plan perpendiculaire au vilebrequin (17).

9. Moteur à combustion interne selon au moins l'une des revendications 1 à 8 précédentes, caractérisé en ce que les axes (A1, A2) à la fois du passage d'admission d'air (23, 25) incliné vers le bas, comprenant le dispositif d'injection de carburant (33) incliné vers le bas et du passage d'admission d'air (24, 35) incliné vers le haut, comprenant le dispositif d'injection de carburant (34) incliné vers le haut, s'étendent symétriquement par rapport à une bissectrice (B) de la rangée de cylindres disposés en V.

10. Moteur à combustion interne selon au moins l'une des revendications 2 à 9 précédentes, caractérisé en ce que chaque corps de tube d'injecteur (35) comprend un trou de guidage d'injection (35a), dans lequel débouche une buse d'injection (37c) respective de la soupape d'injection (37a, 37b).

11. Moteur à combustion interne selon la revendication 10, caractérisé en ce que ledit trou de guidage d'injection (35a) débouche respectivement dans le passage d'admission d'air (23, 35; 24, 35), en aval de la soupape d'étranglement (36, 36a) faisant face à l'orifice d'admission d'air (35a).

12. Moteur à combustion interne selon au moins l'une des revendications 1 à 11 précédentes, caractérisé en ce que les soupapes d'injection de carburant (37a; 37b) sont respectivement disposées le long d'une paroi latérale supérieure ou inférieure du dispositif d'injection de carburant (33) supérieur et d'une paroi latérale inférieure ou supérieure du dispositif d'injection de carburant (34) inférieur.

13. Moteur à combustion interne selon au moins l'une des revendications précédentes 1 à 12, caractérisé en ce que les soupapes d'injection de carburant (37a, 37b) sont respectivement disposées latéralement le long de parois latérales extérieures ou intérieures de chacun des dispositifs d'injection de carburant (33, 34).
